(19) Europäisches Patentamt
European Patent Office
Office européen des brevets

(11) **EP 3 766 565 A1**

(12) **EUROPEAN PATENT APPLICATION**
published in accordance with Art. 153(4) EPC

(43) Date of publication:
**20.01.2021 Bulletin 2021/03**

(51) Int Cl.:
***B01D 39/14*** *(2006.01)*

(21) Application number: **19768322.0**

(22) Date of filing: **13.03.2019**

(86) International application number:
**PCT/CN2019/077975**

(87) International publication number:
**WO 2019/174597 (19.09.2019 Gazette 2019/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.03.2018 CN 201810207894**

(71) Applicant: **Toray Industries, Inc.**
**Tokyo, 103-8666 (JP)**

(72) Inventors:
• ZHANG, Lei
Nantong, Jiangsu 226009 (CN)
• CHANG, Jingying
Nantong, Jiangsu 226009 (CN)
• ZHOU, Haoliang
Nantong, Jiangsu 226009 (CN)

(74) Representative: **Kador & Partner PartG mbB**
**Corneliusstraße 15**
**80469 München (DE)**

(54) **FILTER MATERIAL**

(57) A filter material that contains a non-woven fabric; when the amount of deformation thereof is 10 mm, the three-point bending strength thereof is 2.0 MPa or greater.

EP 3 766 565 A1

**Description**

TECHNICAL FIELD

The invention relates to a filter material.

BACKGROUND ART

At present, in the technical field of coatings such as automobile and building materials, the combination of a non-woven fabric supporting layer and a porous polytetrafluoroethylene membrane is mostly used as a filter element for air filtration which is utilized in an air filtration environment. However, the air filter materials in this field are generally pleated. In the process of pleating, the non-woven fabric supporting material is required to have the properties of a certain stiffness and the pleated parts being not be brittle, to ensure that the shape and position of the pleats remain unchanged. At the same time, during the long-term use process of the filter element, the load-bearing of the filter material itself and also the deformation amounts thereof increase as the amounts of ash accumulation increase, and eventually an "$\Omega$" type deformation will be formed, which will result in increased airflow resistance, reduced clogging capacity, decreased filtration efficiency and shortened service life. Therefore, in order to overcome the above-mentioned defects, there are methods, such as multiple needling or spunlace, to improve the stiffness of the filter material, but the production cycle is long and the cost is high. There are also methods, such as applying cross-linking agent, to harden the filter material, but the cross-linking agent may fall off during long-term use, the durability is poor, which is not conducive to further processing in the future due to harder feeling.

For example, Chinese patent publication No. CN101956296A discloses an aramid spunlace non-woven fabric filter material, and a method for manufacturing the same which comprising hot-pressing a porous polytetrafluoroethylene membrane and a spunlace non-woven fabric. In this method, the stiffness of the filter material is improved by multiple spunlaces. Although the manufactured filter material has high shape retention, the method has drawbacks of high energy consumption and high cost.

SUMMARY OF THE INVENTION

The object of the present invention is to provide a filter material with high three-point bending strength, high air permeability and high collection efficiency.

The technical solution of the present invention is that the filter material of the present invention contains a non-woven fabric, and when the amount of deformation of the filter material is 10 mm, the three-point bending strength thereof is 2.0 MPa or greater.

When the amount of deformation of the filter material of the present invention is 5 mm, the three-point bending strength thereof is preferably 0.8 MPa or greater.

The filter material of the present invention preferably has a structure with two or more layers.

The filter material of the present invention preferably contains a supporting material layer of polyester spunbond non-woven fabric, a conductive carbon black layer, and a porous polytetrafluoroethylene membrane layer, at least one side of the supporting material layer of polyester spunbond non-woven fabric contains a conductive carbon black layer, and the air inflow surface layer is a porous polytetrafluoroethylene membrane layer, and the filter material has a grammage of 130 to 250 g/m$^2$.

The amount of carbon black particles attached to the above conductive carbon black layer is preferably 4 to 8 g/m$^2$.

The above supporting material layer of polyester spunbond non-woven fabric preferably has a grammage of 120 to 248 g/m$^2$.

The air permeability of the above supporting material layer of polyester spunbond non-woven fabric is preferably 30.00 to 50.00 cm$^3$/cm$^2$/s at 125 Pa.

The air permeability of the above porous polytetrafluoroethylene membrane layer is preferably 8.00 to 23.00 cm$^3$/cm$^2$/s at 125 Pa.

The air permeability of the filter material of the present invention is preferably 4.50 to 15.00 cm$^3$/cm$^2$/s at 125 Pa.

The thickness CV value of the filter material of the present invention is preferably 25% or less.

The thickness difference between the highest point and the lowest point of the above supporting material layer of polyester spunbond non-woven fabric is preferably 30 $\mu$m or less.

The beneficial effects of the present invention are that: the problem of low three-point bending strength of the conventional laminating filter material is overcome by the filter material of the present invention, as the prepared filter material has the characteristics of high three-point bending strength, high air permeability and high collection efficiency because of the high temperature thermoforming treatment and cooling treatment on the filter material. The filter material of the present invention can be applied in the field of indoor filtration, automotive air filters, vacuum cleaners, and coating line filtration.

EMBODIMENTS OF THE INVENTION

The filter material of the present invention contains a non-woven fabric, and when the amount of deformation of the filter material is 10 mm, the three-point bending strength thereof is 2.0 MPa or greater. The filter material may have a one-layer structure or a structure with two or more layers. When the filter material of the present invention has a one-layer structure, the filter material may be polyester spunbond non-woven fabric, wet non-woven fabric, or hot-rolled non-woven fabric. The polyester spunbond non-woven fabric is made from polyester as raw material, because polyester has high softening temperature and melting point, good heat resistance, high strength and modulus, as well as good elasticity, wear resistance and impact resistance, and it has good creep resistance under load and good ageing resistance. The above non-woven fabric is manufactured by a spunbond process, in which the polymer is extruded and drawn to form continuous filaments, and the filaments are laid into a web which is then subjected to a self-bonding, thermal bonding, chemical bonding or mechanical reinforcement method to produce spunbond non-woven fabric. As the spunbond non-woven fabric is composed of continuous filaments, the filaments are drawn and cooled by high-speed airflow to form a fiber web, which has a high degree of orientation and crystallinity. Therefore, the spunbond non-woven fabric has higher breaking strength and lower breaking elongation, as well as high three-point bending strength. Wet non-woven fabric is a fiber web fabricated by dehydrating water, fiber and chemical additives in a special forming machine. The formed fiber web is a non-woven fabric fabricated by chemically consolidating with binder. The fibers in the wet non-woven fabric are randomly arranged, and thus the material is almost isotropic. The fiber web subjected to chemically consolidating has characteristics of good uniformity, high strength and low production cost. The hot-rolled non-woven fabric is a non-woven fabric fabricated by heating and pressing the fiber web with one or two pairs of steel rollers or steel rollers wrapped with other materials, and simultaneously applying hot melt adhesive inside the fiber web, which causes part of the fibers in the fiber web to melt and bond, and consolidating the fiber web after cooling. As the hot-rolled non-woven fabric is fabricated by thermally bonding a fabric web which is formed by directly laying short fibers into a web, the strength of the material does not show directionality, i.e., the vertical strength and horizontal strength are similar. After adding the hot melt adhesive, the material has smooth surfaces, good air permeability, and good waterproof performance. In view of the higher breaking strength and three-point bending strength of the filter material, the filter material of the present invention preferably contains a polyester spunbond non-woven fabric.

The filter material of the present invention has a mountain-like shape, and its three-point bending strength is the initial three-point bending strength of the filter material. If the three-point bending strength of the filter material is less than 2.0 MPa, it means that the rigidity of the filter material is low, the stability of the pleats of the pleated products is decreased, and it will be easily deformed or damaged during long-term use, resulting in poor filtration effect and shortened life of the filter material. Considering that the use environment of the product has a high requirement on continuity, when it is replaced in the middle of use, it takes time and efforts, and thus the product is required to have a life as long as possible. When an amount of deformation of the filter material of the present invention is 10 mm, the three-point bending strength is preferably 2.5 MPa or greater, and is more preferably 2.5 MPa to 4.0 MPa.

When the amount of deformation of the filter material of the present invention is 5 mm, the three-point bending strength thereof is preferably 0.8 MPa or greater. The final service life of the filter material is largely determined by the initial modulus of the filter material. When the three-point bending strength at a deformation of 5 mm of the filter material is greater than 0.8 MPa, it means that the initial modulus of the filter material is relatively larger, i.e., it has a strong ability to resist the influence of dust and airflow resistance when the dust holding capacity is small in the initial period of use, and it is not easy to deform and has a long service life. Considering that the ability of the product to resist deformation in the initial period of use should be as strong as possible, and the service life of the product should be extended, when the filter material of the present invention has an amount of deformation of 5 mm, the three-point bending strength is more preferably 1.5 MPa or greater.

The filter material of the present invention preferably has a structure with two or more layers. When the filter material of the present invention has a structure with two layers, one possible situation is that the filter material includes a polyester spunbond non-woven fabric and a porous polytetrafluoroethylene membrane layer. The polyester in the polyester spunbond non-woven fabric has a core-sheath structure, that is, the core-type portion is formed from a high melting point component with a melting point of 220°C to 260°C, and the sheath-type portion is formed from a low melting point component with a melting point of 180°C to 220°C. The core-sheath polyester resin is subjected to processing steps, such as extrusion, drawing, web forming, and reinforcement, to form a polyester spunbond non-woven fabric. The porous polytetrafluoroethylene membrane is a porous product fabricated by calendering stripes, which is extruded from polytetrafluoroethylene, into a semi-finished product, and stretching and thermoforming the semi-finished product at a temperature below the melting point. The microporous polytetrafluoroethylene membrane is a flexible and elastic microporous material with smooth surfaces, high porosity, uniform pore size distribution, and has air permeability and water resistant characteristics. The polyester spunbond non-woven fabric and the porous polytetrafluoroethylene membrane are laminated by a hot-pressing process to obtain the filter material of the present invention. The temperature of the hot pressing process is 180°C to 220°C, because the sheath-type portion of the polyester non-woven fabric can be fully melted, and fully laminated with the porous polytetrafluoroethylene membrane, under a certain pressure applied by the pressing roller, while keeping the core-type portion unmelted. The filter material with two layers laminated in this way not only has a high particle collection efficiency, but also has a certain degree of air permeability. The advantages of high efficiency and low resistance of the filter material can be fully used, when utilized in an environment with high requirements on filtration performance. When the filter material of the present invention has a structure with two layers, another possible situation is that the filter material includes a polyester spunbond non-woven fabric and a conductive carbon black layer. A conductive dispersion is prepared from a certain concentration of conductive carbon black particles, and dispersed into one side of the polyester spunbond non-woven fabric by a printing, spraying or dipping method. After drying, a filter material with conductive function is fabricated. The advantages of good conductive property of the filter material can be fully used, when utilized in an environment with a requirement on antistatic performance.

The filter material of the present invention preferably contains a supporting material layer of polyester spunbond non-woven fabric, a conductive carbon black layer, and a porous polytetrafluoroethylene membrane layer, at least one side of the supporting material layer of polyester spunbond non-woven fabric contains a conductive carbon black layer, and the air inflow surface layer is a porous polytetrafluoroethylene membrane layer, and the filter material has a grammage of 130 to 250 g/m$^2$. One layer of the filter material of the present invention is a spunbond non-woven fabric as a supporting material. The spunbond non-woven fabric is fabricated by extruding, drawing, and laying polymers into a web, and then reinforcing the web. As the spunbond non-woven fabric is composed of continuous long fibers, the continuous fibers are drawn by high-speed airflow to form a web, which has a high degree of orientation and crystallinity. The fibers are crisscross when forming the web, and thus the web has higher breaking strength and lower breaking elongation, as well as high three-point bending strength. The supporting material of the spunbond non-woven fabric in the filter material of the present invention is formed from polyester as the raw material, as the polyester fibers can maintain excellent physical properties in a wide temperature range, have high impact strength, good friction resistance, good rigidity and stiffness, small moisture absorption, and good dimensional stability, and can withstand the corrosion of most organic solvents and inorganic acids. The polyester fiber in the present invention is a polyester fiber with a core-sheath structure. Among them, the fiber of the core-type portion is designed to be formed from a high-melting polyester component, and the polyester component of the sheath-type portion is designed to have a low melting point, such that the fiber of the sheath-type portion with a low melting point will be melted due to high temperature, when laminated with the porous polytetrafluoroethylene membrane by a hot-pressing method, enabling the porous polytetrafluoroethylene membrane to be bonded with the polyester spunbond non-woven fabric more firmly.

Although the above polyester spunbond non-woven fabric can be ensured to have a certain degree of air permeability, it is far from meeting the requirement on filtration. Therefore, a layer of porous polytetrafluoroethylene membrane is hot-pressed on the polyester spunbond non-woven fabric in order to obtain a filter material with higher collection efficiency. Polytetrafluoroethylene has good chemical stability, small friction coefficient, high temperature resistance, and can be fabricated into a film with a large number of micropores and a small pore size, which has the characteristics that its dust removal efficiency is high and not affected by the particle size distribution, its surface is easy to remove dust, and it has lower and stable dust removal resistance, good air permeability, and long service life.

Here, at least one side of the spunbond non-woven fabric support material layer contains a conductive carbon black layer means that a layer of conductive carbon black layer is provided on the upper surface and/or the lower surface of the support material layer of spunbond non-woven fabric, that is, the filter material of the present invention includes the following two types: (1) according to the sequence of exposure to air, the first layer is a porous polytetrafluoroethylene membrane layer, the second layer is a conductive carbon black layer, and the third layer is a supporting material layer of spunbond non-woven fabric, which form a structure with three layers from top to bottom; (2) according to the sequence of exposure to air, the first layer is a porous polytetrafluoroethylene membrane layer, the second layer is a conductive carbon black layer, the third layer is a supporting material layer of spunbond non-woven fabric, and the fourth layer is a conductive carbon black layer, which form a structure with four layers from top to bottom.

The grammage of the filter material of the present invention is preferably 130 to 250 g/m$^2$. The grammage of the filter material is closely related to the three-point bending strength. The greater the grammage is, the thicker the material is, the greater the amount of fibers per unit area is, and the more fibers used for resisting deformation in the unit size when the filter material is reinforced by form fiber webs are. Accordingly, the three-point bending strength increases. Therefore, if the grammage of the filter material is too small, the content of fibers is lower, the material is soft as a whole, and has poor shape retention after pleating processing, i.e., it is easy to deform. If the grammage of the filter material is too large, although the three-point bending strength is greatly improved, the material is thicker, the air permeability thereof is lower after laminating, the pressure loss during filtration is higher, and additionally the cost of the product is higher.

In the present invention, the amount of the attached conductive carbon black particles is preferably 4 to 8 g/m$^2$.

If the amount of the attached conductive carbon black particles is too high, the air permeability of the spunbond non-woven fabric supporting material per se decreases, and its hardness is increased, the material becomes hard, which is inconvenient for the subsequent pleating processing. If the amount of the attached conductive carbon black particles is too small, the conductivity of the support material per se cannot be guaranteed, which limits its application range.

The supporting material layer of polyester spunbond non-woven fabric in the present invention preferably has a grammage of 120 to 248 g/m$^2$. If the grammage of the supporting material layer of polyester spunbond non-woven fabric is too small, the filter material is relatively soft, the inter-pleat stability is poor after processing, and it is easily deformed during use, resulting in a reduction in the collection efficiency of the filter material. If the grammage of the supporting material layer of polyester spunbond non-woven fabric is too large, the thickness of the base material increases, and the final air permeability of the filter material decreases after hot pressing and laminating. Moreover, the rigidity of the base material is large, it is not easy to be processed during the pleating process, and the inter-pleat size is unstable after pleating.

The air permeability of the above supporting material layer of polyester spunbond non-woven fabric is preferably 30.00 to 50.00 cm$^3$/cm$^2$/s at 125 Pa. The filtration effect and service life of the final product is determined by the air permeability thereof. If the air permeability of the supporting material layer of polyester spunbond non-woven fabric is too small, its thickness is relatively greater, which is not conducive to the subsequent pleating process, and the air permeability of the obtained filter material will become smaller after laminated with the porous polytetrafluoroethylene membrane, thus the pressure loss will be relatively higher during use, and the operating power will be larger. If the air permeability of the supporting material layer of polyester spunbond non-woven fabric is too large, the grammage of the supporting material per se is relatively lower, and the requirement on stiffness cannot be achieved after pleating process. Furthermore, the collection efficiency of the filter material decreases, after the filter material is laminated with the porous polytetrafluoroethylene membrane.

The air permeability of the above porous polytetrafluoroethylene membrane layer is preferably 8.00 to 23.00 cm$^3$/cm$^2$/s at 125 Pa. If the air permeability of the porous polytetrafluoroethylene membrane layer is too small, it means that the pore size and porosity in the structure of the porous polytetrafluoroethylene membrane are relatively smaller. Although the collection efficiency of the filter material after lamination is improved, the pressure loss is relatively larger, and the apparatus equipped with the same has higher operation cost, and shorter service life. If the air permeability of the porous polytetrafluoroethylene membrane layer is too large, the air permeability of the filter material after lamination is higher than 15 cm$^3$/cm$^2$/s, and the filtration effect cannot meet the requirements. Furthermore, the membrane is easy to wear in long-term use as the membrane per se is relatively thinner.

The air permeability of the filter material of the present invention is preferably 4.50 to 15.00 cm$^3$/cm$^2$/s at 125 Pa. If the air permeability of the filter material is too small, the pressure loss is large when the filter material is used, the cost of cleaning is high, and its service life is shortened. If the air permeability of the filter material is too large, it means that the effective filtration size of the filter material is relatively larger, i.e., the particles may easily pass through the filter material, and thus the requirement on filtering effect cannot be achieved.

The thickness CV value of the filter material of the present invention is preferably 25% or less. The thickness CV value refers to the degree of dispersion of the thickness of the filter material, that is, the degree of uniformity of the thickness. The smaller the thickness CV value of the filter material is, the better it is. The smaller the thickness CV value, the more uniform the thickness of the filter material is, and the better the thickness uniformity is, the better the subsequent pleating and use are. If the thickness CV value of the filter material is too large, the uniformity of the thickness of the filter material becomes poor. After the subsequent pleating, it is easy to cause unevenness in filtration efficiency, pressure loss and air permeability, which affects the filtration effect and life in the actual use process.

The thickness difference between the highest point and the lowest point of the above supporting material layer of polyester spunbond non-woven fabric is preferably 30 $\mu$m or less. The thickness of the highest point of the supporting material layer of spunbond non-woven fabric of the present invention refers to the value of the largest thickness in the cross-section of the whole non-woven fabric, and the thickness of the lowest point refers to the value of the smallest thickness in the cross-section of the whole non-woven fabric. The thickness difference between thicknesses of the highest point and the lowest point of the spunbond non-woven fabric of the present invention must be within a certain range, i.e., the surface of the spunbond filament non-woven fabric is flat and has no obvious uneven points. If the thickness difference between the thicknesses of the highest point and the lowest point in the surface of the spunbond non-woven fabric is greater than 30 $\mu$m, in the subsequent laminating of the porous polytetrafluoroethylene membrane, on one hand, due to the uneven surface of the spunbond non-woven fabric, the surface tension of the porous polytetrafluoroethylene membrane is not uniform, and it will also reduce the yield of the laminated porous membrane filter material; on the other hand, the uneven surface of the spunbond non-woven fabric decreases the contact area between the porous polytetrafluoroethylene membrane and the spunbond non-woven fabric supporting layer, so that the porous polytetrafluoroethylene membrane is more likely to fall off the surface of the spunbond non-woven fabric supporting layer under continuous pulse dedusting in actual use, reducing the service life of the overall filter material.

The method for manufacturing the filter material of the present invention comprises the following steps:

(1) preparation of the conductive supporting material: the conductive carbon black particle dispersion is dispersed on at least one side of the polyester spunbond non-woven fabric by printing, spraying or dipping to obtain a conductive supporting material;

(2) preparation of the filter material: one side of the conductive supporting material with attached conductive carbon black particles is laminated with the porous polytetrafluoroethylene membrane by hot pressing, and then, a thermoforming process is performed at a thermoforming temperature of 110 to 200°C, and the finished product is finally fabricated.

A certain proportion of adhesive is required to be added to the conductive carbon black particle dispersion described in the above step (1), in order to prevent the carbon black particles in the surface of the spunbond non-woven fabric from falling off, thus failing to achieve the required requirement on electrical conductivity. The printing method herein refers to a gravure printing method, specifically, the entire surface of the printing plate is covered with ink, and then a special scraping mechanism is used for removing the ink in the blank part, so that the ink only remains in the mesh cells of the graphic portion, and the ink is transferred to the surface of the substrate under a relatively larger pressure to obtain the printed product. It has the characteristics that the amount of adhesion can be accurately controlled, the impact on the permeability of the substrate is small, and it can be produced quickly. The spraying method is that the conductive carbon black dispersion is processed to form uniform and fine mist droplets through a spray gun or atomizer by means of compressed air, which is then applied to the polyester spunbond non-woven fabric supporting material. The spraying method is simple and has lower cost, but the nozzle in the method is easy to be clogged during spraying and required to be cleaned frequently. The dipping method has drawbacks that the adhesion amount is not easy to be controlled, the uniformity cannot be guaranteed, which greatly affects the air permeability of the finished product, and it has high energy consumption during the attachment process. In summary, the printing processing method is preferred.

In the above step (1), the drying temperature ranges from 120 to 160°C. If the drying temperature is lower than 120°C, the conductive carbon black layer cannot be sufficiently attached to the surface of the supporting material, resulting in insufficient firmness. If the drying temperature is greater than 160°C, on one hand, the fibers with a core-sheath structure will be partially melted, which results in decreased strength of the supporting material. On the other hand, the melted fibers may wrap the conductive carbon black, which results in decreased conductivity.

In the above step (2), the thermoforming process is performed at a thermoforming temperature of 110 to 200°C. As the filter material is required to be pleated, it will deform during long-term use, resulting in increased airflow resistance, reduced clogging capacity, decreased filtration efficiency and shortened service life of the filter. Typically, the crystallinity of polyester filament can be about 45% to 60%, and thermoforming treatment under certain conditions may improve the crystallinity of the fiber. After the polyester fiber is heated, its molecular structure will change in three stages. Firstly, when the temperature is above the glass transition temperature (80°C to 90°C), the molecular chain segments will start to move. Then the movement of the molecular chains is intensified as the temperature gradually increases, and the adjustment of the molecular chains is completed at the new position. Finally, the positions of the molecular chain segments are fixed below the glass transition temperature. When the thermoforming temperature is below 110°C, the molecules of the polyester fiber have just entered a high elastic state. Thus, the restriction on movement of the macromolecular chain segments is eliminated and they start to rotate around the single bonds of the main axes of the macromolecules, but there is not enough energy to move a large displacement. Therefore, the crystallinity of the fiber does not change much, and the elastic modulus does not increase much. With the increase of temperature in the stage of 120°C to 200°C, the macromolecules in the fiber gradually gain energy for movement. The constraints between the molecules are gradually reduced. Thus, the macromolecules can slip and dislocate and curl. The elastic modulus of the fiber decreases rapidly. The deformability increases. The shrinkage rate also increases significantly. The molecular structures of large fibers change significantly. The crystallinity, the degree of orientation, and the density of the molecules are increased. However, if the thermoforming temperature is higher than 200°C, the fiber is in a state close to a viscous flow state. Thus, the crystallinity will be significantly decreased, the elastic modulus will also be decreased significantly, and the strength and stiffness will also be reduced significantly. Therefore, the dimensional stability is poor. If the thermoforming temperature is lower than 110°C, the fiber cannot obtain enough energy to complete the rearrangement within and between the molecules, and the crystallinity and orientation thereof change little. In summary, the thermoforming temperature of the filter material is preferably 120 to 160°C.

After the above thermoforming process, the filter material is further subjected to cooling treatment. Because after the thermoforming treatment, the molecular chain segments in the material are adjusted at new positions. As the crystallinity increases, the filter material is required to be quickly and evenly lowered below the glass transition temperature thereof, so that the molecular chain segments are stabilized at new positions, thereby achieving the requirement on high three-point bending strength. If the cooling temperature is long, the physical properties of the filter material are not uniform, and thus the dimensional stability is poor during use, and it is easy to deform.

The present invention will be described in more detail in combination with the following embodiments, but the protection scope of the present invention is not limited by these embodiments. The method for measuring the physical properties of the filter material of the present invention is as follows.

[Grammage]

The filter material was cut into a square of 200 mm×200 mm. The grammage of the filter material was calculated from the weight thereof on an average of 3 times, and the final result was taken as the average value of the 3 times.

[Thickness]

The thickness of the filter material is measured by a thickness dial gauge (under an extrusion force of 0.000245Pa). For a filter material having an area of 1 m×1 m, 10 points in the horizontal direction and 10 points in the longitudinal direction were measured. A total of 100 points were selected for measurement, and the average value thereof was calculated.

[Thickness CV value]

The thickness CV value refers to the degree of dispersion of the thickness of the filter material, that is, the degree of uniformity of the thickness. The formula for calculating the thickness CV value is as follows:

$$CV=\sigma/\mu\times100\%,$$

wherein, σ represents the standard deviation of the thickness of the filter material, and
μ represents the average thickness.

[Thickness difference of spunbond non-woven fabric]

10 samples with a length of 10 mm and a width of 2 mm was prepared to perform an SEM cross-sectional analysis thereon with shooting magnification of 100 times, 20 points were selected in each sample, and the section thicknesses of the 20 points were measured. The maximum value of the section thicknesses of the 20 points in one sample was recorded as h1, and the minimum value of the section thicknesses was recorded as h2. 10 samples were tested respectively, and finally the maximum and the minimum of the average thicknesses of the 10 samples are taken. The formula for calculating the thickness difference is as follows:

$$\text{Thickness difference = maximum average thickness in the cross-section - minimum average thickness in the cross-section.}$$

[Air permeability]

Based on the JIS L 1096 standard, the air permeability of the filter material is measured at 30 points, which are randomly selected, by Fraizer fabric air permeability testing method, and the results are averaged.

[Collection efficiency]

Based on the method for testing the collection efficiency of the filter material provided by the JIS B 9908 standard, the collection efficiency of the filter material is determined.

[Three-point bending strength]

Based on the GB/T 9341-2008 standard, using two sections of free support, central loading test method (three-point loading test), the three-point bending strength of the filter materials with an amount of deformations of 5 mm and 10 mm is measured respectively. The formula for calculating the three-point bending strength is as follows:

$$\sigma_f = 3FL/2bd^2,$$

wherein $\sigma_f$: bending strength (MPa);
F: load (N);
L: distance between fulcrums (mm);
b: width of the sample (mm);
d: thickness of the sample (mm).

[Surface resistance]

According to the DIN 54345 standard, five samples of 120mm×120mm are cut to measure the surface resistance of the conductive filter material, and the results are averaged.

Embodiment 1

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped; (2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 140°C, and finally subjected to cooling treatment to obtain a filter material with a thickness of 0.61 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 2

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing a conductive support material, which was then crimped; (2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.61 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 3

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing a conductive support material, which was then crimped;
(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 180°C, and finally subjected to cooling treatment to obtain a filter material with a thickness of 0.61 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 4

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 220 g/m$^2$, air permeability of 33.61 cm$^3$/cm$^2$/s) by spraying method, such that the amount of the attached carbon black particles on the side of the polyester filament non-woven fabric was 6 g/m$^2$, and then the polyester spunbond non-woven fabric with attached carbon black particles was arranged in an oven at a temperature of 130°C for drying, thereby preparing the conductive support material, which was then crimped;
(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to heat setting treatment at a temperature of 160°C, and finally subjected to cooling treatment to obtain a filter material with a thickness of 0.65 mm and a grammage of 230 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 5

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 220 g/m$^2$, air permeability of 33.61 cm$^3$/cm$^2$/s) by spraying method, such that the amount of the attached carbon black particles on the side of the polyester filament non-woven fabric was 6 g/m$^2$, and then the polyester spunbond non-woven fabric with attached carbon black particles was arranged in an oven at a temperature of 130°C for drying, thereby preparing a conductive support material, which was then crimped;
(2) Preparation of the filter material: the surface of the conductive support material with carbon black particles prepared in the above step (1) was hot-pressed with a porous polytetrafluoroethylene membrane having an air permeability of 26.33 cm³/cm²/s, and then the prepared laminating filtering material was processed through a pleating setting machine and subjected to thermoforming treatment at a temperature of 160°C, and finally subjected to cooling treatment to obtain a filter material with a thickness of 0.65 mm and a grammage of 228 g/m². According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 6

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m², air permeability of 36.97 cm³/cm²/s) by printing method, such that the amount of the attached carbon black particles on the side of the polyester filament non-woven fabric was 4 g/m², and then the polyester spunbond non-woven fabric with attached carbon black particles was arranged in an oven at a temperature of 130°C for drying, thereby preparing a conductive support material, which was then crimped;
(2) Preparation of the filter material: the surface of the conductive support material with carbon black particles prepared in the above step (1) was hot-pressed with a porous polytetrafluoroethylene membrane having an air permeability of 16.14 cm³/cm²/s, and then the prepared laminating filtering material was processed through a pleating setting machine and subjected to thermoforming treatment at a temperature of 200°C, and finally subjected to cooling treatment to obtain a filter material with a thickness of 0.61 mm and a grammage of 208 g/m². According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 7

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 125 g/m², air permeability of 49.54 cm³/cm²/s) by spraying method, such that the amount of the attached carbon black particles on the side of the polyester filament non-woven fabric was 6 g/m², and then the polyester spunbond non-woven fabric with attached carbon black particles was arranged in an oven at a temperature of 130°C for drying, thereby preparing a conductive support material, which was then crimped;
(2) Preparation of the filter material: the surface of the conductive support material with carbon black particles prepared in the above step (1) was hot-pressed with a porous polytetrafluoroethylene membrane having an air permeability of 16.14 cm³/cm²/s, and then the prepared laminating filtering material was processed through a pleating setting machine and subjected to thermoforming treatment at a temperature of 160°C, and finally subjected to cooling treatment to obtain a filter material with a thickness of 0.35 mm and a grammage of 133 g/m². According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 8

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 6 g/m$^2$, and then the polyester spunbond non-woven fabric with attached carbon black particles was arranged in an oven at a temperature of 130°C for drying, thereby preparing a conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.61 mm and a grammage of 210 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 1.

Embodiment 9

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 180°C, to obtain a filter material with a thickness of 0.61 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 10

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 240 g/m$^2$, air permeability of 30.26 cm$^3$/cm$^2$/s) by printing method, such that the amount of the attached carbon black particles on the side of the polyester filament non-woven fabric was 8 g/m$^2$, and then the polyester spunbond non-woven fabric with attached carbon black particles was arranged in an oven at a temperature of 130°C for drying, thereby preparing a conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.72 mm and a grammage of 250 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 11

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to both sides of the supporting material of polyester spunbond non-woven fabric (grammage of 240 g/m$^2$, air permeability of 30.26 cm$^3$/cm$^2$/s) by printing method, such that the amount of the attached carbon black particles on both sides of the polyester filament non-woven fabric was 8 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: any one of the surfaces of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.72 mm and a grammage of 250 g/m$^2$. According to the sequence of exposure to air, the air inflow surface layer of the filter material is the porous polytetrafluoroethylene membrane layer, and the air outflow surface layer is the conductive carbon black layer. The physical properties of the filter material in the present invention are listed in table 2.

Embodiment 12

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 2 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.60 mm and a grammage of 206 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 13

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 150 g/m$^2$, air permeability of 39.73 cm$^3$/cm$^2$/s) by spraying method, such that the amount of the attached carbon black particles on the side of the polyester filament non-woven fabric was 6 g/m$^2$, and then the polyester spunbond non-woven fabric with attached carbon black particles was arranged in an oven at a temperature of 130°C for drying, thereby preparing a conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.45 mm and a grammage of 158 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 14

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 200 g/m$^2$, air permeability of 36.97 cm$^3$/cm$^2$/s) by spraying method, such that the amount of the attached carbon black particles on the side of the polyester filament non-woven fabric was 6 g/m$^2$, and then the polyester spunbond non-woven fabric with attached carbon black particles was arranged in an oven at a temperature of 130°C for drying, thereby preparing a conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.61 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 15

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 150 g/m$^2$, air permeability of 39.73 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.45 mm and a grammage of 158 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 16

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was uniformly applied to one side of the supporting material of polyester spunbond non-woven fabric (grammage of 150 g/m$^2$, air permeability of 39.73 cm$^3$/cm$^2$/s) by spraying method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.45 mm and a grammage of 158 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 17

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the supporting material of polyester spunbond non-woven fabric (grammage of 150 g/m$^2$, air permeability of 39.73 cm$^3$/cm$^2$/s) was immersed in the conductive carbon black dispersion, such that the amount of the attached carbon black particles on the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.45 mm and a grammage of 158 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material in the present invention are listed in table 2.

Embodiment 18

The supporting material of polyester spunbond non-woven fabric with grammage of 240 g/m$^2$ and air permeability of 30.26 cm$^3$/cm$^2$/s was processed through a pleating setting machine and subjected to thermoforming treatment at a temperature of 160°C, and finally subjected to cooling treatment to obtain a filter material with a thickness of 0.69 mm and a grammage of 240 g/m$^2$. The physical properties of the filter material are listed in table 3.

Embodiment 19

The supporting material of polyester spunbond non-woven fabric with grammage of 240 g/m$^2$ and air permeability of 30.26 cm$^3$/cm$^2$/s was hot-pressed at one side, with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.70 mm and a grammage of 242 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material are listed in table 3.

Embodiment 20

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 240 g/m$^2$, air permeability of 30.26 cm$^3$/cm$^2$/s) by printing method, such that the amount of the attached carbon black particles on the side of the polyester filament non-woven fabric was 8 g/m$^2$, and then the polyester spunbond non-woven fabric with attached carbon black particles was arranged in an oven at a temperature of 130°C for drying, thereby preparing the conductive support material, which was then crimped;

(2) Preparation of the filter material: the conductive support material prepared in the above step (1) was subjected to thermoforming treatment at a temperature of 160°C, and finally subjected to cooling treatment to obtain a filter material with a thickness of 0.71 mm and a grammage of 248 g/m$^2$. According to the sequence of exposure to air, the air inflow surface layer of the filter material is the conductive carbon black layer, and the air outflow surface layer is the supporting material layer of polyester spunbond non-woven fabric. The physical properties of the filter material in the present invention are listed in table 3.

Embodiment 21

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester wet non-woven fabric (grammage of 200 g/m$^2$, air permeability of 31.56 cm$^3$/cm$^2$/s) by printing method, such that the amount of the attached carbon black particles on the side of the polyester wet non-woven fabric was 4 g/m$^2$, and then the polyester wet non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.60 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester wet non-woven fabric. The physical properties of the filter material in the present invention are listed in table 3.

Embodiment 22

(1) Preparation of the conductive support material: water was added to 17 parts by weight of conductive carbon black particles with a particle size of 4 μm, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester hot rolled non-woven fabric (grammage of 200 g/m$^2$, air permeability of 30.24 cm$^3$/cm$^2$/s) by printing method, such that the amount of the attached carbon black particles on the side of the polyester hot rolled non-woven fabric was 4 g/m$^2$, and then the polyester hot rolled non-woven fabric with attached carbon black particles was arranged in an oven at a temperature of 130°C for drying, thereby preparing the conductive support material, which was then crimped;

(2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine and subjected to thermoforming treatment at a temperature of 160°C, and finally subjected to cooling treatment to obtain a filter material with a thickness of 0.60 mm and a grammage of 208 g/m$^2$. According to the sequence of exposure to air, the air inflow surface layer of the filter material is the porous polytetrafluoroethylene membrane layer, and the air outflow surface layer is the supporting material layer of polyester hot rolled non-woven fabric. The physical properties of the filter material in the present invention are listed in table 3.

The filter materials prepared in Embodiments 1 to 22 can be used for air filtration, such as indoors, automobile air filters, and dust collectors, and can also be used in the field of filtration in painting line for automobile, building material, and powder coating of hardware accessories.

Comparative Example 1

(1) Preparation of the conductive support material: water was added to 17 parts by weight of conductive carbon black particles with a particle size of 4 $\mu$m, and 3 parts by weight of acrylic resin to form 100 parts by weight of a mixture, and then the mixture was sufficiently stirred to prepare a conductive carbon black dispersion, and the prepared conductive carbon black dispersion was applied to one side of the supporting material of polyester spunbond non-woven fabric (grammage of 200 g/m$^2$, air permeability of 36.97 cm$^3$/cm$^2$/s) by printing method, such that the amount of the attached carbon black particles on the side of the polyester filament non-woven fabric was 4 g/m$^2$, and then the polyester spunbond non-woven fabric with attached carbon black particles was arranged in an oven at a temperature of 130°C for drying, thereby preparing the conductive support material, which was then crimped; (2) Preparation of the filter material: the surface of the conductive support material with carbon black particles prepared in the above step (1) was hot-pressed with a porous polytetrafluoroethylene membrane having an air permeability of 16.14 cm$^3$/cm$^2$/s, and then the prepared laminating filtering material was processed through a pleating setting machine, to finally obtain a filter material with a thickness of 0.61 mm and a grammage of 209 g/m$^2$. According to the sequence of exposure to air, the air inflow surface layer of the filter material is the porous polytetrafluoroethylene membrane layer, and the air outflow surface layer is the supporting material layer of polyester spunbond non-woven fabric. The physical properties of the filter material are listed in table 4.

Comparative Example 2

The polyester woven fabric with grammage of 240 g/m$^2$ and air permeability of 54.35 cm$^3$/cm/s was processed through a pleating setting machine and subjected to thermoforming treatment at a temperature of 160°C, and finally subjected to cooling treatment to obtain a filter material with a thickness of 0.85 mm and a grammage of 240 g/m$^2$. The physical properties of the filter material are listed in table 4.

Table 1-1

| Item | | | Embodiment 1 | Embodiment 2 | Embodiment 3 | Embodiment 4 |
|---|---|---|---|---|---|---|
| Non-woven fabric supporting material layer | | Form | polyester spunbond non-woven fabric | polyester spunbond non-woven fabric | polyester spunbond non-woven fabric | polyester spunbond non-woven fabric |
| | | grammage (g/m$^2$) | 200 | 200 | 200 | 220 |
| | | Air permeability at 125 Pa (cm$^3$/cm$^2$/s) | 36.97 | 36.97 | 36.97 | 33.61 |
| Conductive carbon black layer | | Amount of attached carbon black (g/m$^2$) | 4 | 4 | 4 | 6 |
| | | Processing method | Printing | Printing | Printing | Spraying |
| Porous polytetrafluoroethylene membrane | | Air permeability at 125 Pa (cm$^3$/cm$^2$/s) | 16.14 | 16.14 | 16.14 | 16.14 |

(continued)

| Item | | Embodiment 1 | Embodiment 2 | Embodiment 3 | Embodiment 4 |
|---|---|---|---|---|---|
| Filter material | Grammage (g/m²) | 208 | 208 | 208 | 230 |
| | Thickness (mm) | 0.61 | 0.61 | 0.61 | 0.65 |
| | thermo forming temperature (°C) | 140 | 160 | 180 | 160 |
| | Air permeability at 125 Pa (cm³/cm²/s) | 9.88 | 9.65 | 9.76 | 5.35 |
| | Collection efficiency (%) | 99.9985 | 99.9990 | 99.9987 | 99.9992 |
| | Surface resistance (Ω) | $9.8 \times 10^4$ | $9.8 \times 10^4$ | $9.8 \times 10^4$ | $8.4 \times 10^4$ |
| | Three-point bending strength at a deformation of 5 mm (MPa) | 1.9 | 2.1 | 1.5 | 2.2 |
| | Three-point bending strength at a deformation of 10 mm (MPa) | 3.0 | 3.3 | 2.8 | 3.5 |

Table 1-2

| Item | | Embodiment 5 | Embodiment 6 | Embodiment 7 | Embodiment 8 |
|---|---|---|---|---|---|
| Non-woven fabric supporting material layer | Form | polyester spunbond non-woven fabric | polyester spunbond non-woven fabric | polyester spunbond non-woven fabric | polyester spunbond non-woven fabric |
| | grammage (g/m²) | 220 | 200 | 125 | 200 |
| | Air permeability at 125 Pa (cm³/cm²/s) | 33.61 | 36.97 | 49.54 | 36.97 |
| Conductive carbon black layer | Amount of attached carbon black (g/m²) | 6 | 4 | 6 | 6 |
| | Processing method | Spraying | Printing | Spraying | Printing |
| Porous polytetrafluoroethylene membrane | Air permeability at 125 Pa (cm³/cm²/s) | 26.33 | 16.14 | 16.14 | 16.14 |

(continued)

| Item | | Embodiment 5 | Embodiment 6 | Embodiment 7 | Embodiment 8 |
|---|---|---|---|---|---|
| Filter material | Grammage (g/m$^2$) | 228 | 208 | 133 | 210 |
| | Thickness (mm) | 0.65 | 0.61 | 0.35 | 0.61 |
| | thermo forming temperature (°C) | 160 | 200 | 160 | 160 |
| | Air permeability at 125 Pa (cm$^3$/cm$^2$/s) | 6.95 | 7.44 | 14.93 | 4.57 |
| | Collection efficiency (%) | 99.9989 | 99.9983 | 99.9972 | 99.9993 |
| | Surface resistance (Ω) | $8.4 \times 10^4$ | $9.8 \times 10^4$ | $8.4 \times 10^4$ | $8.4 \times 10^4$ |
| | Three-point bending strength at a deformation of 5 mm (MPa) | 2.2 | 1.8 | 0.7 | 1.8 |
| | Three-point bending strength at a deformation of 10 mm (MPa) | 3.5 | 2.6 | 2.0 | 2.6 |

Table 2-1

| Item | | Embodiment 9 | Embodiment 10 | Embodiment 11 | Embodiment 12 | Embodiment 13 |
|---|---|---|---|---|---|---|
| non-woven fabric supporting material layer | Form | Polyester spunbond non-woven fabric | Polyester spunbond non-woven fabric | Polyester spunbond non-woven fabric | Polyester spunbond non-woven fabric | Polyester spunbond non-woven fabric |
| | Grammage (g/m$^2$) | 200 | 240 | 240 | 200 | 150 |
| | Air permeability at 125 Pa (cm$^3$/cm$^2$/s) | 36.97 | 30.26 | 30.26 | 36.97 | 39.73 |
| Conductive carbon black layer | Amount of attached carbon black (g/m$^2$) | 4 | 8 | 8 | 2 | 6 |
| | Processing method | Printing | Printing | Printing | Printing | Spraying |
| Porous polytetrafluoroethylene membrane | Air permeability at 125 Pa (cm$^3$/cm$^2$/s) | 16.14 | 16.14 | 16.14 | 16.14 | 16.14 |
| Filter material | Grammage (g/m$^2$) | 208 | 250 | 250 | 206 | 158 |
| | Thickness (mm) | 0.61 | 0.72 | 0.72 | 0.60 | 0.45 |
| | thermo forming temperature (°C) | 180 | 160 | 160 | 160 | 160 |
| | Air permeability at 125 Pa (cm$^3$/cm$^2$/s) | 9.72 | 5.12 | 5.04 | 10.11 | 10.85 |
| | Collection efficiency (%) | 99.9987 | 99.9993 | 99.9994 | 99.9980 | 99.9979 |
| | Surface resistance ($\Omega$) | $9.8\times10^4$ | $7.0\times10^4$ | $6.3\times10^4$ | $1.0\times10^5$ | $8.4\times10^4$ |
| | Three-point bending strength at a deformation of 5 mm (MPa) | 1.7 | 2.4 | 2.5 | 1.8 | 1.2 |
| | Three-point bending strength at a deformation of 10 mm (MPa) | 2.7 | 4.1 | 4.2 | 2.9 | 2.4 |

19

Table 2-2

| Item | | Embodiment 14 | Embodiment 15 | Embodiment 16 | Embodiment 17 |
|---|---|---|---|---|---|
| non-woven fabric supporting material layer | Form | Polyester spunbond non-woven fabric | Polyester spunbond non-woven fabric | Polyester spunbond non-woven fabric | Polyester spunbond non-woven fabric |
| | Grammage (g/m$^2$) | 200 | 150 | 150 | 150 |
| | Air permeability at 125 Pa (cm$^3$/cm$^2$/s) | 36.97 | 39.73 | 39.73 | 39.73 |
| Conductive carbon black layer | Amount of attached carbon black (g/m$^2$) | 6 | 4 | 4 | 4 |
| | Processing method | Spraying | Printing | Spraying | Impregnation |
| Porous polytetrafluoroethylene membrane | Air permeability at 125 Pa (cm$^3$/cm$^2$/s) | 16.14 | 16.14 | 16.14 | 16.14 |
| Filter material | Grammage (g/m$^2$) | 208 | 158 | 158 | 158 |
| | Thickness (mm) | 0.61 | 0.45 | 0.45 | 0.45 |
| | thermo forming temperature (°C) | 160 | 160 | 160 | 160 |
| | Air permeability at 125 Pa (cm$^3$/cm$^2$/s) | 9.68 | 10.88 | 10.96 | 10.76 |
| | Collection efficiency (%) | 99.9990 | 99.9978 | 99.9975 | 99.9976 |
| | Surface resistance (Ω) | $8.4 \times 10^4$ | $9.8 \times 10^4$ | $9.8 \times 10^4$ | $9.8 \times 10^4$ |
| | Three-point bending strength at a deformation of 5 mm (MPa) | 1.8 | 1.5 | 1.1 | 0.9 |
| | Three-point bending strength at a deformation of 10 mm (MPa) | 3.1 | 2.2 | 2.1 | 2.0 |

Table 3

| Item | | Embodiment 18 | Embodiment 19 | Embodiment 20 | Embodiment 21 | Embodiment 22 |
|---|---|---|---|---|---|---|
| Non-woven fabric supporting material layer | Form | Polyester spunbond non-woven fabric | Polyester spunbond non-woven fabric | Polyester spunbond non-woven fabric | Polyester wet non-woven fabric | Polyester hot rolling non-woven fabric |
| | Grammage (g/m$^2$) | 240 | 240 | 240 | 200 | 200 |
| | Air permeability at 125 Pa (cm$^3$/cm$^2$/s) | 30.26 | 30.26 | 30.26 | 31.56 | 30.24 |
| Conductive carbon black layer | Amount of attached carbon black (g/m$^2$) | - | - | 8 | 4 | 4 |
| | Processing method | - | - | Printing | Printing | Printing |
| Porous polytetrafluoroethylene membrane | Air permeability at 125 Pa (cm$^3$/cm$^2$/s) | - | 16.14 | - | 16.14 | 16.14 |
| Filter material | Grammage (g/m$^2$) | 240 | 242 | 248 | 208 | 208 |
| | Thickness (mm) | 0.69 | 0.70 | 0.71 | 0.60 | 0.60 |
| | Thermo forming temperature (°C) | 160 | 160 | 160 | 160 | 160 |
| | Air permeability at 125 Pa (cm$^3$/cm$^2$/s) | 30.26 | 8.72 | 24.02 | 7.45 | 6.85 |
| | Collection efficiency (%) | 58.8535 | 99.9990 | 64.6693 | 99.9986 | 99.9988 |
| | Surface resistance (Ω) | $6.4\times10^5$ | $6.4\times10^5$ | $7.0\times10^4$ | $9.8\times10^4$ | $9.8\times10^4$ |
| | Three-point bending strength at a deformation of 5 mm (MPa) | 1.3 | 1.5 | 2.2 | 1. 1 | 1.3 |
| | Three-point bending strength at a deformation of 10 mm (MPa) | 2.5 | 2.8 | 3.1 | 2.5 | 2.6 |

Table 4

| Item | | Comparative example 1 | Comparative example 2 |
|---|---|---|---|
| Non-woven fabric supporting material layer | Form | Polyester spunbond non-woven fabric | Polyester woven fabric |
| | Grammage (g/m$^2$) | 200 | 240 |
| | Air permeability at 125 Pa (cm$^3$/cm$^2$/s) | 36.97 | 54.35 |
| Conductive carbon black layer | Amount of attached carbon black (g/m$^2$) | 4 | - |
| | Processing method | Printing | - |
| Porous polytetrafluoroethylene membrane | Air permeability at 125 Pa (cm$^3$/cm$^2$/s) | 16.14 | - |
| Filter material | Grammage (g/m$^2$) | 209 | 240 |
| | Thickness (mm) | 0.61 | 0.85 |
| | thermoforming temperature (°C) | - | 160 |
| | Air permeability at 125 Pa (cm$^3$/cm$^2$/s) | 9.80 | 54.35 |
| | Collection efficiency (%) | 99.9980 | 38.2679 |
| | Surface resistance ($\Omega$) | $9.8 \times 10^4$ | $6.4 \times 10^5$ |
| | Three-point bending strength at a deformation of 5 mm (MPa) | 0.8 | 0.8 |
| | Three-point bending strength at a deformation of 10 mm (MPa) | 1.3 | 1.5 |

According to the above tables,

(1) it can be seen from Embodiments 1, 2, 3, and 6 that under the same conditions, when the thermoforming temperature of the filter materials in Embodiments 1 and 2 is in the preferred range, the obtained filter material has a higher three-point bending strength at an amount of deformation of 10 mm.

(2) it can be seen from Embodiments 4, 7, 13, and 14 that under the same conditions, the grammage of the supporting material of polyester spunbond non-woven fabric in Embodiment 4 is greater, the obtained filter material has a larger grammage and a higher three-point bending strength, and the supporting material of polyester spunbond non-woven fabric has a lower air permeability, so that the collection efficiency of the filter material is higher.

(3) it can be seen from Embodiment 4 and Embodiment 5 that under the same conditions, when the air permeability of the porous polytetrafluoroethylene membrane in Embodiment 4 is within the preferred range, the collection efficiency of the obtained filter material is slightly higher than that in Embodiment 5.

(4) it can be seen from Embodiment 3 and Embodiment 9 that under the same conditions, after the thermoforming treatment in Embodiment 9, no cooling treatment is performed, and the three-point bending strength of the obtained filter material at an amount of deformation of 10 mm was slightly lower.

(5) it can be seen from Embodiments 2, 8, 10, and 12 that under the same conditions, the amount of the attached conductive carbon black particles in Embodiment 10 is larger, and the smaller the surface resistance of the obtained filter material is, the better the conductive performance thereof is.

(6) it can be seen from Embodiment 10 and Embodiment 11 that under the same conditions, after conducting the conductive processing on both sides of the filter material in Embodiment 11, the obtained filter material has a slightly higher collection efficiency and three-point bending strength at an amount of deformation of 10 mm, and has good electrical conductivity.

(7) it can be seen from Embodiments15, 16, and 17 that under the same conditions, when the processing method of the conductive carbon black layer of the filter material in Embodiment 15 is in the preferred range, the obtained filter material has a higher three-point bending strength at amounts of deformation of 10 mm and 5 mm.

(8) it can be seen from Embodiments 10, 18, 19, and 20 that under the same conditions, when the filter material in Embodiment 10 contains both a conductive carbon black layer and a porous polytetrafluoroethylene membrane layer, the obtained filter material has a higher three-point bending strength at amounts of deformation of 10 mm and 5 mm. Meanwhile, the filter material has a higher collection efficiency and better electrical conductivity.

(9) it can be seen from Embodiments 2, 21, and 22 that under the same conditions, the non-woven fabric support material of the filter material in Embodiment 2 is a preferred polyester spunbond non-woven fabric, and the obtained filter material has a higher three-point bending strength at amounts of deformation of 10 mm and 5 mm.

(10) it can be seen from Embodiment 1 and Comparative Example 1 that under the same conditions, the thermoforming treatment is not performed in Comparative Example 1, and the obtained filter material has a lower three-point bending strength.

(11) it can be seen from Embodiment 18 and Comparative Example 2 that under the same conditions, the filter material in Comparative Example 2 uses polyester woven fabric, and the obtained filter material has a lower three-point bending strength.

## Claims

1. A filter material, **characterized in that** the filter material contains a non-woven fabric, and when the amount of deformation of the filter material is 10 mm, the three-point bending strength thereof is 2.0 MPa or greater.

2. The filter material according to claim 1, wherein when the amount of deformation of the filter material is 5 mm, the three-point bending strength thereof is 0.8 MPa or greater.

3. The filter material according to claim 1 or 2, wherein the filter material has a structure with two or more layers.

4. The filter material according to claim 3, wherein the filter material contains a supporting material layer of polyester spunbond non-woven fabric, a conductive carbon black layer, and a porous polytetrafluoroethylene membrane layer, at least one side of the supporting material layer of polyester spunbond non-woven fabric contains a conductive carbon black layer, and the air inflow surface layer is a porous polytetrafluoroethylene membrane layer, and the filter material has a grammage of 130 to 250 $g/m^2$.

5. The filter material according to claim 4, wherein the amount of carbon black particles attached to the conductive carbon black layer is 4 to 8 $g/m^2$.

6. The filter material according to claim 4, wherein the supporting material layer of polyester spunbond non-woven fabric has a grammage of 120 to 248 $g/m^2$.

7. The filter material according to claim 4, wherein the air permeability of the supporting material layer of polyester spunbond non-woven fabric is 30.00 to 50.00 $cm^3/cm^2/s$ at 125 Pa.

8. The filter material according to claim 4, wherein the air permeability of the porous polytetrafluoroethylene membrane layer is 8.00 to 23.00 $cm^3/cm^2/s$ at 125 Pa.

9. The filter material according to claim 4, wherein the air permeability of the filter material is 4.50 to 15.00 $cm^3/cm^2/s$ at 125 Pa.

10. The filter material according to claim 1 or 2, wherein the thickness CV value of the filter material is 25% or less.

11. The filter material according to claim 4, wherein the thickness difference between the highest point and the lowest point of the supporting material layer of polyester spunbond non-woven fabric is 30 $\mu$m or less.

**EP 3 766 565 A1**

## INTERNATIONAL SEARCH REPORT

| | International application No. |
|---|---|
| | **PCT/CN2019/077975** |

**A. CLASSIFICATION OF SUBJECT MATTER**

B01D 39/14(2006.01)i

According to International Patent Classification (IPC) or to both national classification and IPC

**B. FIELDS SEARCHED**

Minimum documentation searched (classification system followed by classification symbols)

B01D

Documentation searched other than minimum documentation to the extent that such documents are included in the fields searched

Electronic data base consulted during the international search (name of data base and, where practicable, search terms used)

CNABS, CNTXT, CNKI, VEN: 聚酯, 无纺布, 非织造布, 导电, 炭黑, 聚四氟乙烯, polyester, non woven, conduct+, carbon black, PTFE, polytetrafluoroethylene

**C. DOCUMENTS CONSIDERED TO BE RELEVANT**

| Category* | Citation of document, with indication, where appropriate, of the relevant passages | Relevant to claim No. |
|---|---|---|
| X | CN 107097474 A (TORAY FIBER RESEARCH INSTITUTE (CHINA) CO., LTD.) 29 August 2017 (2017-08-29) description, paragraphs [0017]-[0036], [0060], table 1 and embodiments 1, 2, 6 and 7 | 1-11 |
| X | CN 106552458 A (TORAY FIBER RESEARCH INSTITUTE (CHINA) CO., LTD.) 05 April 2017 (2017-04-05) description, particular embodiments | 1-11 |
| X | CN 107019958 A (TORAY FIBER RESEARCH INSTITUTE (CHINA) CO., LTD.) 08 August 2017 (2017-08-08) description, particular embodiments | 1-11 |
| X | JP 2004230217 A (NITTO DENKO CORP.) 19 August 2004 (2004-08-19) description, paragraphs [0005]-[0027] | 1-11 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 May 2019** | **12 June 2019** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

24

**INTERNATIONAL SEARCH REPORT**
Information on patent family members

International application No.

**PCT/CN2019/077975**

| Patent document cited in search report | | | Publication date (day/month/year) | Patent family member(s) | Publication date (day/month/year) |
|---|---|---|---|---|---|
| CN | 107097474 | A | 29 August 2017 | None | |
| CN | 106552458 | A | 05 April 2017 | None | |
| CN | 107019958 | A | 08 August 2017 | None | |
| JP | 2004230217 | A | 19 August 2004 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101956296 A
- GB 93412008 T